(19)

Europäisches
Patentamt
European
Patent Office
Office européen
des brevets

(11)  EP 2 871 758 A1

(12)  **EUROPEAN PATENT APPLICATION**

(43) Date of publication:
**13.05.2015 Bulletin 2015/20**

(51) Int Cl.:
*H02M 1/15* (2006.01)          *H02M 1/42* (2007.01)

(21) Application number: **13192185.0**

(22) Date of filing: **08.11.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **NXP B.V.
5656 AG Eindhoven (NL)**

(72) Inventors:
• **Mahdavikhah-Mehrabad,, Seyed-Behzad
Redhill, Surrey RH1 1SH (GB)**
• **Prodic,, Aleksandar
Redhill, Surrey RH1 1SH (GB)**

• **Ahsannuzzaman,, S.M.
Redhill, Surrey RH1 1SH (GB)**

(74) Representative: **Hardingham, Christopher Mark
NXP B.V.
Intellectual Property & Licensing
Red Central
60 High Street
Redhill, Surrey RH1 1SH (GB)**

Remarks:
Amended claims in accordance with Rule 137(2)
EPC.

(54)   **A circuit for a PFC circuit**

(57)     A ripple reduction circuit for a PFC circuit, the
PFC circuit comprising a main PFC stage (102) and an
auxiliary converter stage (104) connected across a load
(115). The ripple reduction circuit comprising an input
configured to receive error signalling (128, 129) repre-
sentative of a difference between a measured voltage of
the PFC circuit and a reference value; a low frequency
compensator (132) configured to low-pass filter the error
signalling (129) in order to provide a low frequency control
signal representative (140) of a low frequency component of a voltage level in the auxiliary converter stage
(104); a gain value determinator (134, 135) configured
to determine a ripple gain value in accordance with a
difference between the error signalling (128) and a ref-
erence ac voltage ripple level; and a high frequency com-
pensator (133) configured to band-pass filter the error
signalling in order to generate a high frequency control
signal for regulating the amplitude of a ripple voltage
across the load, wherein the ripple gain value is applied
to the pass-band of the high frequency compensator; and
an output control signal generator configured to provide
an output control signal for the auxiliary converter stage
in accordance with the low frequency control signal and
the high frequency control signal.

Figure 1

**Description**

This disclosure relates to a ripple reduction circuit for a PFC circuit, in particular a PFC circuit comprising a main PFC stage and an auxiliary converter stage connected across a load.

According to a first aspect of the invention there is provided a ripple reduction circuit for a PFC circuit, the PFC circuit comprising a main PFC stage and an auxiliary converter stage connected across a load, the ripple reduction circuit comprising:

an input configured to receive error signalling representative of a difference between a measured voltage of the PFC circuit and a reference value;
a low frequency compensator configured to low-pass filter the error signalling in order to provide a low frequency control signal representative of a low frequency component of a voltage level in the auxiliary converter stage;
a gain value determinator configured to determine a ripple gain value in accordance with a difference between the error signalling and a reference ac voltage ripple level;
a high frequency compensator configured to band-pass filter the error signalling in order to generate a high frequency control signal for regulating the amplitude of a ripple voltage across the load, wherein the ripple gain value is applied to the pass-band of the high frequency compensator; and
an output control signal generator configured to provide an output control signal for the auxiliary converter stage in accordance with the low frequency control signal and the high frequency control signal.

Advantageously, this ripple reduction circuit can enable control of a trade-off between overall power processing efficiency, cost of the system, and the amount of ripple cancellation.

The error signalling may be representative of a difference between a measured voltage of the auxiliary converter stage and a reference value.

The low frequency control signal may be representative of a dc component of the voltage level in the auxiliary converter stage.

The gain value determinator may comprise a ripple detector configured to extract a ripple component signal from the error signalling. The ripple detector may comprise a high-pass filter or a band-pass filter configured to filter out dc components, and optionally other low frequency components that are less than a ripple frequency, of the error signalling.

The gain value determinator may comprise a ripple regulator adder configured to determine a difference between the ripple component signal and the reference ac voltage level in order to provide a ripple error signal.

The gain value determinator may comprise a gain setting controller and a variable gain setting block. The gain setting controller may be configured to provide a control signal to the variable gain setting block. The variable gain setting block may be configured to set the ripple gain value in accordance with the control signal received from the gain setting controller. The gain setting controller may be configured to provide a control signal that is indicative of whether the ripple gain value should be increased or decreased by a fixed amount.

The high frequency compensator may be configured to band-pass filter the error signalling. The pass-may band include a frequency that corresponds to double the line frequency of a received ac waveform, which may be correspond to a ripple frequency.

The error signalling may comprise: a main error signal representative of a difference between the voltage across the load and a main reference value; and an auxiliary error signal representative of a difference between a voltage of the auxiliary converter stage and an auxiliary reference value.

The low frequency compensator may be configured to low-pass filter the auxiliary error signal in order to provide the low frequency control signal. The high frequency compensator may be configured to band-pass filter the main error signal. The gain value for the pass-band of the band-pass filter may be set in accordance with a difference between the auxiliary error signal and a reference AC voltage ripple level.

The output control signal generator may comprise an auxiliary control adder that is configured to determine a difference between the high frequency control signal from the low frequency control signal in order to provide a duty ratio control signal. The output control signal generator may further comprise a DPWM configured to provide auxiliary control signalling in accordance with the duty ratio control signal.

There may be provided an integrated circuit comprising any ripple reduction circuit disclosed herein.

There may be provided an led lighting controller or a programmable output charger comprising any ripple reduction circuit disclosed herein.

Embodiments will now be described by way of example with reference to the accompanying figures, in which:

figure 1 illustrates a circuit that includes a main power factor correction stage, an auxiliary converter and a controller circuit;

figure 2 shows example waveforms of various power, voltage and current waveforms for the circuit of figure 1;

figure 3 illustrates an example implementation of an error generator such as the one shown in figure 1;

figure 4 illustrates an example implementation of a high frequency (band-pass) compensator such as the one shown in figure 1;

figure 5 illustrates, as a block diagram, an example of a discrete-time control law that a ripple suppression compensator can implement to obtain a suitable transfer function;

figure 6 illustrates graphically an example of the transfer function of a band-pass filter that can be applied by a ripple suppression compensator;

figure 7 illustrates waveforms of various attributes of the circuit of figure 1 when in use;

figures 8a and 8b show steady state operation of a Flyback PFC both with and without ripple cancellation while operating with $V_{in}$=110Vrms, $V_{out}$=5V, $P_{load}$=10W;

figures 9a and 9b show steady state operation of a Flyback PFC both with and without ripple cancellation while operating with $V_{in}$=110Vrms, $V_{out}$=20V, $P_{load}$=20W; and

figure 10 shows graphically the steady state operation of the PFC with the same operating conditions of figure 8b.

Embodiments disclosed herein relate to a ripple reduction circuit for a PFC circuit having a main PFC stage and an auxiliary converter stage connected across a load. The auxiliary converter stage may also be referred to as a ripple cancellation circuit. The ripple reduction circuit includes a low frequency compensator and a high frequency compensator, which provide control signals that, together with commonly existing controller of the main PFC converter, can enable simultaneous and independent regulation of the output dc voltage values and ripple amplitudes for both the main PFC stage and the auxiliary converter stage. In this way a cost-effective solution for controlling the operation of the ripple cancellation circuit is provided, which can allow regulation of a trade-off between overall power processing efficiency (especially the amount of power consumed by the auxiliary converter stage), cost of the system (especially the output capacitor of the main stage and cost and quality of components required in the auxiliary converter stage), and the amount of ripple cancellation.

In numerous applications of rectifiers with power factor correction, that is PFC rectifiers, minimization or reduction of ripple in the output voltage can be advantageous. For example in LED lighting applications where an unacceptably high level of ripple can cause the LEDs to flicker, and for universal programmable output chargers / adapters for mobile devices. The ripple voltage is typically at twice the line frequency (the frequency of the mains power supply) due to rectification of the received AC mains power supply.

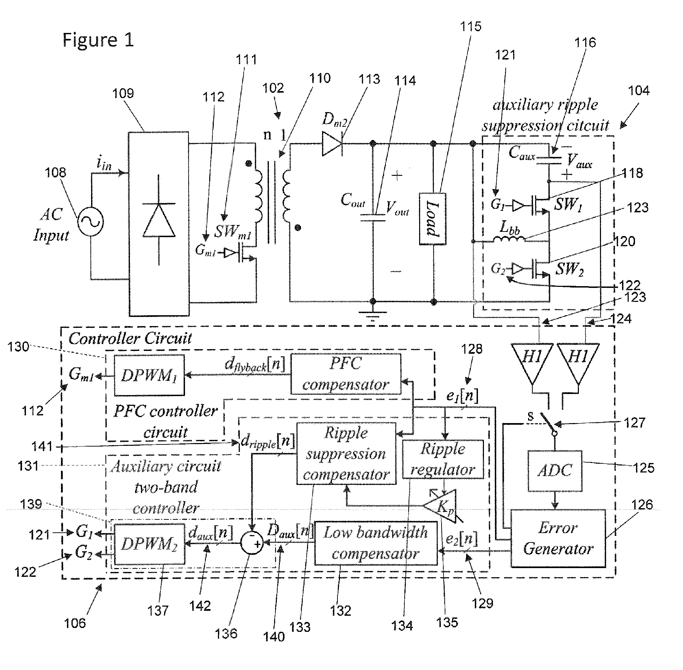

Figure 1 illustrates a circuit that includes a main power factor correction (PFC) stage 102, an auxiliary converter stage 104 and a controller circuit 106 for controlling the main PFC stage 102 and the auxiliary converter stage 104. The auxiliary converter stage 104 may also be referred to as an auxiliary ripple suppression circuit or a ripple cancellation circuit. The main PFC stage 102 and the auxiliary converter stage 104 may be together referred to as a PFC circuit or PFC circuit with ripple cancellation or PFC circuit with harmonics injection.

In this example the main PFC stage 102 is a flyback converter having a flyback transformer with a first winding and a second winding, although other types of PFC circuits, such as boost-based, sepic-based and many others, can be used. The main PFC stage 102 receives an AC input current $i_{in}$ from an AC input source 108, which may be a mains supply. The AC input current $i_{in}$ is rectified by a bridge rectifier 109. The rectified current signal is passed through the first winding of the flyback transformer 110 and a main control switch $SW_{m1}$ 111, that are in series with each other as is known in the art. The main control switch 111 is operated in accordance with a main switch control signal $G_{m1}$ 112, as described below.

A main diode $D_{m2}$ 113 and an output capacitor $C_{out}$ 114 are coupled in series across the second winding of the flyback transformer 110. A load 115 is coupled in parallel with the output capacitor $C_{out}$ 114 in order to provide an output voltage $V_{out}$ across the load 115.

In this example the auxiliary converter stage 104 is a buck-boost converter, although other types of auxiliary circuits (a boost for example) can be used. The auxiliary converter stage 104 is connected in parallel with the load 115, and includes an auxiliary capacitor $C_{aux}$ 116, a first auxiliary control switch $SW_1$ 118 and a second auxiliary control switch $SW_2$ 120 in series between the two terminals of the load 115. An auxiliary inductor $L_{bb}$ 123 is connected in parallel with the series arrangement of the auxiliary capacitor $C_{aux}$ 116 and the first auxiliary control switch $SW_1$ 118. The first auxiliary control switch $SW_1$ 118 is operated in accordance with a first auxiliary control signal $G_1$ 121 and the second auxiliary control switch $SW_2$ 120 is operated in accordance with a second auxiliary control signal $G_2$ 122, as described below.

The voltage across the auxiliary capacitor $C_{aux}$ 116 will be referred to as the auxiliary stage voltage $V_{aux}$.

The auxiliary converter stage 104 may be relatively small, inasmuch as it handles lower voltage and/or power levels than the main PFC stage 102. The auxiliary converter stage can improve voltage regulation by transferring the current component at twice the line frequency from the output capacitor $C_{out}$ 114 of the main PFC stage 102 to the auxiliary capacitor $C_{aux}$. Since the auxiliary / assisting stage is dealing only with a portion of the output power, it can demonstrate lower volume compared to alternative two-stage solutions, and in some applications also higher efficiency.

In order to achieve a high power factor and low harmonic distortion, the input current of the PFC circuit should follow the input voltage waveform. Therefore the instantaneous input power has a sinusoidal component at twice the line frequency, that is $2\omega_l$. Since the load of the PFC takes dc output power, the difference between the ac and dc component is usually stored. In a single stage PFC, this difference is stored in an output capacitor creating an ac voltage ripple, where the amplitude of the ripple voltage ($\Delta v_{out}$) is given by the following approximate equation:

$$2\Delta v_{out} = V_{out} \left[ \sqrt{1 + \frac{P_{load}}{\omega C_{out} V_{out}^2}} - \sqrt{1 - \frac{P_{load}}{\omega C_{out} V_{out}^2}} \right] \approx \frac{P_{load}}{\omega C_{out} V_{out}} , \qquad (1)$$

where $P_{load}$ is the dc output power, $C_{out}$ is the output capacitor value, and $V_{out}$ is the dc output voltage.

Equation (1) shows that the maximum ripple is inversely proportional to the dc output voltage value. In low voltage applications, such as programmable output adapters, this relationship can have a significant effect on the required output capacitance value. For example, to provide a 5V, 10W output with 1% regulation with a single stage PFC, a prohibitively large 60mF output capacitor would be needed.

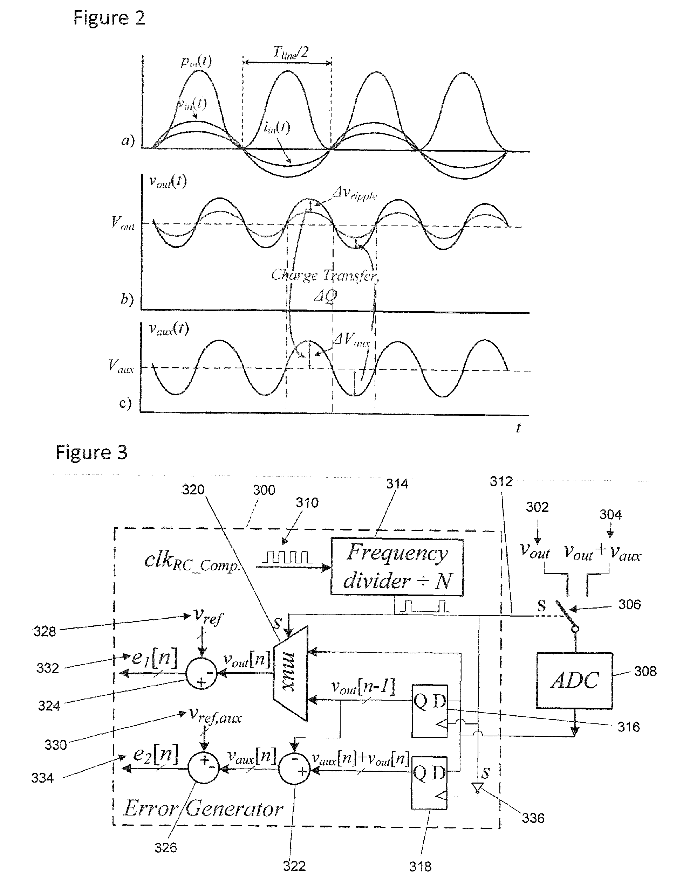

Figure 2 shows example waveforms of various power, voltage and current waveforms for the circuit of figure 1. For the circuit of figure 1, a portion of the output capacitor charge $\Delta q(t)$, and therefore a portion of the associated current, is transferred to the auxiliary converter stage to reduce the ripple. This transfer results in an output voltage ripple reduction by $\Delta v_{ripple}$, which is proportional to the amplitude of the ac auxiliary stage voltage $\Delta V_{aux}$. As shown in figure 1, the polarity of $V_{aux}$ is the opposite way around to the polarity of $V_{out}$. It will be appreciated that the required connection between the main PFC stage and the auxiliary converter stage, and their respective polarities, will depend upon the types of the main PFC stage and auxiliary stage being used.

As described below, the output ripple reduction has nonlinear dependence on the power rating of the auxiliary converter stage and also depends on the dc value of the main PFC stage's output voltage, its capacitance value, and the output load value. Therefore, selection of the ripple attenuation involves trade-offs between the output capacitor volume and the overall system efficiency, since the losses, size and cost of the auxiliary converter stage are roughly proportional to its power ratings, that is, the amount of power it is processing. For example, if the auxiliary stage is designed to completely eliminate the ripple of the output capacitor, its power ratings (and cost) needs to be equal to that of the main power stage. To manage this trade-off, the controller of figure 1 advantageously provides regulation of both the ripple amplitudes and the dc values of the main PFC output voltage and the auxiliary converter stage output voltage, allowing a much smaller auxiliary converter stage to be used.

Returning to figure 1, the controller circuit 106 in this example has two controller circuit input terminals for receiving signals from the PFC circuit representative of measured voltage levels in the main PFC stage 102 and the auxiliary converter stage 104. A first controller circuit input terminal 123 receives a first voltage signal representative of $V_{out}$ from a node at the positive terminal the output capacitor $C_{out}$ 114. A second controller circuit input terminal 124 receives a second voltage signal representative of ($V_{out} + V_{aux}$) from a node at the positive terminal the auxiliary capacitor $C_{aux}$ 116. In an alternative implementation, the voltage of the auxiliary capacitor $C_{aux}$ 116 would be directly measured. Such an implementation may use an additional differential sensing circuit.

The controller circuit 106 includes an analogue to digital converter (ADC) 125 for converting the analogue voltage signals received at the first controller circuit input terminal 123 and the second controller circuit input terminal 124 into digital signals for further processing. In this example, the first controller circuit input terminal 123 and the second controller circuit input terminal 124 are selectively connected to an input of a single ADC 125 by a multiplexer switch 127 that is controlled such that the signals received at the input to the ADC 125 are time multiplexed. Using a single ADC 125 to process both the outputs of the main PFC stage 102 and the auxiliary converter stage 104 can simplify the hardware requirements of the circuit. The control signal for this multiplexer switch 127 will be described below with reference to figure 3.

The output of the ADC 125 is connected to an input of an error generator 126. The error generator 126 provides a main error signal $e_1[n]$ 128 and an auxiliary error signal $e_2[n]$ 129. The main error signal $e_1[n]$ 128 is representative of, in this example proportional to, a difference between the measured value for $V_{out}$ and a reference (desired) dc value for $V_{out}$. The auxiliary error signal $e_2[n]$ 129 is representative of a difference between the measured value for $V_{aux}$ and a reference value for $V_{aux}$, which in this example is its desired dc value.

Figure 3 illustrates an example implementation of an error generator 300 such as the one shown in figure 1. This implementation eliminates the need for using the previously mentioned differential sensor, which in some applications can be a costly element. Also shown in figure 3 is a first controller circuit input terminal 302, a second controller circuit input terminal 304, an ADC 308 and a multiplexer switch 306 that are all the same as the corresponding components that are illustrated in figure 1.

The error generator 300 receives a clock signal 310, which is used as the basis for generating the time multiplexed control signal 312 for the multiplexer switch 306. In the example of figure 1, the controller has three control loops, as will be described in more detail below. Each of these loops has different bandwidth requirements, and therefore the time multiplexing of the ADC 308 is controlled such that the $v_{out}$ signal that is received at the first controller circuit input terminal 302 is sampled more frequently than the $(v_{out} + v_{aux})$ signal that is received at the second controller circuit input terminal 304. This is achieved with a frequency divider 314 that divides the frequency of the received clock signal 310 by N and provides its output signal to the control input of the multiplexer switch 306. In this way, $(v_{out} + v_{aux})$ is sampled at a rate N times slower than that $v_{out}$.

The error generator 300 in this example determines the value of $v_{aux}$ by subtracting the $v_{out}$ signal received at the first controller circuit input terminal 302 from the $(v_{out} + v_{aux})$ signal received at the second controller circuit input terminal 304. Since the digital values of these two signals are not simultaneously determined by the ADC 308 due to the time multiplexing, $v_{aux}$ is determined through the subtraction of two consecutive samples.

The error generator includes a first D-type flip-flop 316, a second D-type flip-flop 318, a multiplexer 320, a main error adder 324, an auxiliary error adder 326 and an auxiliary voltage adder 322.

The output of the ADC 308 is connected to the D input of both the first D-type flip-flop 316 and the second D-type flip-flop 318. The output of the frequency divider 314 is connected to the clock input of the first D-type flip-flop 316. The output of the frequency divider 314 is connected to the clock input of the second D-type flip flop 316 through a NOT gate 336. Clocking the D-type flip-flops 316, 318 in this way causes the correct portion of the ADC output signal to be passed to the Q outputs of the respective D-type flip-flops 316, 318 at the appropriate times. In this way, the first D-type flip-flop 316 processes the $v_{out}$ signals and the second D-type flip-flop 318 processes the $(v_{out} + v_{aux})$ signals.

The Q output of the first D-type flip flop 316 is connected to a negative / subtracting input of the auxiliary voltage adder 322. The Q output of the second D-type flip-flop 318 is provided to a positive / adding input of the auxiliary voltage adder 322. The output of the auxiliary voltage adder 322 is therefore representative of the auxiliary stage voltage $v_{aux}$ as it represents $(v_{out} - v_{aux}) - v_{out}$.

The $v_{aux}$ signal that is output by the auxiliary voltage adder 322 is provided to a negative / subtracting input of the auxiliary error adder 326. A reference voltage for the auxiliary stage voltage, $v_{ref, aux}$ 330 is provided to a positive / adding input of the auxiliary error adder 326. The value of $v_{ref, aux}$ 330 can be set in accordance with requirements for a specific application or can be dynamically set, as discussed below.

The output of the auxiliary error adder 326 is the auxiliary error signal $e_2[n]$ 334, which is representative of a difference between the measured value of $v_{aux}$ and the reference value for $v_{aux}$.

Advantageously, the error generator 300 of this example can eliminate the need for a differential amplifier to determine $v_{aux}$ measurements.

The output of the ADC 308 is connected to a first input of the multiplexer 320. The output of the first D-type flip flop 316, which represents a time-delayed value of $v_{out}$, is connected to a second input of the multiplexer 320. The multiplexer 320 is clocked by the output of the frequency divider 314. In this way, the first input of the multiplexer 320 is connected to the output of the multiplexer 320 when the ADC is outputting the $v_{out}$ signal, and the second input of the multiplexer 320 is connected to the output of the multiplexer 320 when the ADC is outputting the $(v_{out} + v_{aux})$ signal. Therefore, the time delayed version of $v_{out}$ is output by the multiplexer 320 when the ADC is outputting the $(v_{out} + v_{aux})$ signal.

The output of the multiplexer 320 is connected to a negative / subtracting input of the main error adder 324. A reference voltage for the main PFC stage output voltage, $v_{ref}$ 328 is provided to a positive / adding input of the main error adder 324. The value of $v_{ref}$ 328 will typically be set in accordance with instantaneous requirements of a specific application, for example depending upon the brightness of LED lighting that is required or depending upon the level of charging that is required if the PFC circuit is used as a battery charger.

The output of the main error adder 324 is the main error signal $e_1[n]$ 332, which is representative of a difference between the measured value of $v_{out}$ and the reference value for $v_{out}$.

Returning now to figure 1, the main error signal $e_1[n]$ 128 that is output by the error generator 126 is provided as an input to a main PFC controller 130. Both the main error signal $e_1[n]$ 128 and the auxiliary error signal $e_2[n]$ 129 that are output by the error generator 126 are provided as inputs to an auxiliary stage controller 131. The auxiliary stage controller 131 therefore has an input configured to receive error signalling (in this example both the main error signal $e_1[n]$ 128 and the auxiliary error signal $e_2[n]$ 129) that is representative of a difference between a measured voltage the PFC circuit and a reference value.

The main PFC controller 130 shown in figure 1 is well-known in the art and includes a main PFC compensator and a main digital pulse width modulator $DPWM_1$, that together provide the main switch control signal $G_{m1}$ 112 for the main control switch $SW_{m1}$ 111. The main PFC controller 130 can be considered as providing a main control loop.

The auxiliary stage controller 131 is an example of a ripple regulation circuit for the PFC circuit, which can control and manage a trade-off between the value of the voltage across the auxiliary converter stage ($V_{aux}$) and the size of the ripple in the output voltage of the PFC circuit ($V_{out}$). Such control and management can enable an efficient PFC circuit to be provided because, for example, the auxiliary converter stage can be controlled such that only a minimum voltage across the auxiliary converter stage occurs, that is, the minimum power is processed by the auxiliary converter stage, whilst still enabling an acceptably small ripple in the output voltage of the PFC circuit ($V_{out}$), thereby reducing overall power consumption of the auxiliary circuit.

The auxiliary stage controller 131 includes a low frequency compensator 132, a gain value determinator, a high frequency compensator 133 and an output control signal generator 139. The low frequency compensator 132 in this example is a low-bandwidth compensator 132. The gain value determinator comprises a ripple regulator 134 and a variable gain setting block $K_p$ 135 and is configured to determine a ripple gain value (that is, gain value of the compensator at the ripple frequency) in accordance with a difference between the measured ripple level and a reference ac voltage ripple level. The high frequency compensator 133 in this example is a ripple suppression compensator 133 that is configured to band-pass filter the main error signal $e_1[n]$ in order to generate a high frequency control signal for regulating the amplitude of a ripple voltage across the load, wherein the ripple gain value is applied to the pass-band of the ripple suppression compensator 133. The output control signal generator 139 includes an auxiliary control adder 136 and an auxiliary digital pulse width modulator $DPWM_2$ 137.

The auxiliary stage controller 131 can be considered as having two control loops: a first loop that includes the low bandwidth compensator 132 for controlling a dc voltage level of the auxiliary stage voltage $v_{aux}$; and a second loop that includes the ripple suppression compensator 133 for controlling the amplitude of the ripple in the main PFC output voltage $v_{out}$, which is the voltage across the load 115. In this way, the auxiliary converter stage 104 can be controlled such that it regulates both the dc component of its own output voltage and the ripple component of the main PFC stage 102. Furthermore, a desired trade-off between these two attributes be advantageously controlled.

The auxiliary error signal $e_2[n]$ 129 is provided as an input to the low bandwidth compensator 132. This low bandwidth compensator 132 processes the auxiliary error signal $e_2[n]$ 129, in this example it low-pass filters $e_2[n]$ 129, in order to provide a low frequency control signal $D_{aux}[n]$ 140 representative of a low frequency component of $v_{aux}$. The low frequency component may be a dc value. In this example, the low frequency control signal $D_{aux}[n]$ 140 is not intended to provide any information about the ripple voltage, and therefore the low bandwidth compensator 132 has a cut-off frequency that is much lower than twice the line frequency ($2\omega_l$). For example, the cut-off frequency may be an order to magnitude lower than $2_{\omega l}$ and / or the gain of the transfer characteristic of the low bandwidth compensator 132 may be less than a threshold value at a frequency of $2\omega_l$.

The low frequency control signal $D_{aux}[n]$ 140 is provided to a positive / adding input of the auxiliary control adder 136, which will be described further below.

The main error signal $e_1[n]$ 128 is provided as an input to the high frequency compensator 133. The high frequency compensator 133 produces a control signal $d_{ripple}[n]$ 141 that will be a fast varying component of the control signal that will regulate the ripple in the output voltage $v_{out}$. The high frequency compensator 133 can be designed such that it behaves as a modified damped resonant compensator, that is, a band pass filter. It can suppress low frequency components of the error signal to eliminate or reduce their influence on the operation of the auxiliary converter stage and can have a limited gain at $2\omega_l$. To control the ripple amplitude, this gain is adjusted based on desired design trade-offs.

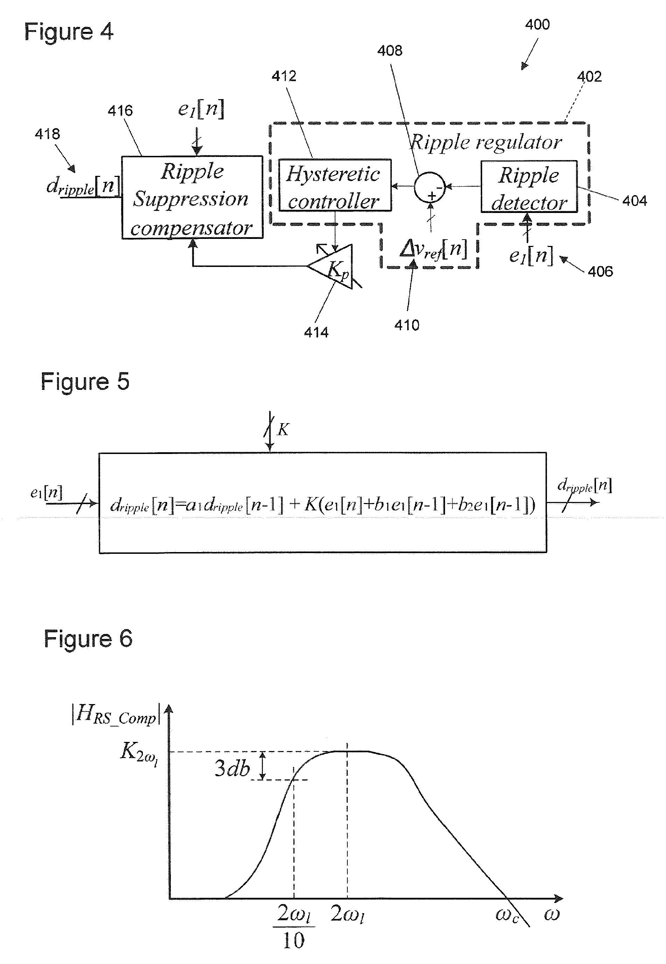

As will be described with reference to figure 4, the gain K of the ripple suppression compensator 133 is adjusted based on a desired ripple amplitude ($\Delta v_{ref}[n]$). This is performed such that the ripple regulator block 134 varies the parameter K, which is proportional to the overall gain of the ripple suppression compensator 133. The range of the gain values can be selected based on a calculation of a desired auxiliary power stage power rating.

Further details of the high frequency compensator 133 are described with reference to figure 4.

Figure 4 illustrates an example implementation of a high frequency compensator 400 such as the one shown in figure 1. The high frequency compensator 400 includes a ripple regulator 402 that receives a main error signal $e_1[n]$ 406 (such as the one illustrated in figure 1), a variable gain setting block Kp 414, and a ripple suppression compensator 416. The ripple regulator 402 includes a ripple detector 404, a ripple regulator adder 408, and a hysteretic controller 412. The ripple regulator may be referred to as a gain value determinator.

The main error signal $e_1[n]$ 406 is provided as an input to the ripple detector 404. The ripple detector 404 is configured to extract and output a ripple component signal from the main error signal $e_1[n]$ 406, wherein the ripple component signal is representative of the ac ripple voltage at the output of the main PFC stage $V_{out}$. The ripple detector 404 can be a high pass filter or a band-pass filter that can filter out dc, and optionally also low frequency components, of the main error signal $e_1[n]$ 406.

The ripple component signal output by the ripple detector 404 is provided to a negative / subtracting input of the ripple regulator adder 408. A reference voltage for the amplitude of the ripple voltage, $\Delta v_{ref}[n]$ 410 is provided to a positive / adding input of the ripple regulator adder 408. The value of $\Delta v_{ref}[n]$ 410 can be set in accordance with requirements for a specific application or can be dynamically set, as discussed below. The ripple regulator adder 408 compares the value of the desired ripple amplitude of the PFC output capacitor voltage with the actual ripple value in order to determine a difference between the ripple component signal and the reference ac voltage level and output a ripple error signal. This can be performed by looking at the ripple detector output, which extracts the ripple amplitude from $e_1[n]$. It

is recalled that $e_1[n]$, in addition to containing information about the ripple also contains information about transient conditions and any other changes in the output circuit. For this reason, the ripple detector 404 is used to remove the non-ripple components.

The ripple error signal output by the ripple regulator adder 408 is provided to an input of the hysteretic controller 412. The hysteretic controller 416 is an example of a gain setting controller. Based on the ripple error signal as output by the ripple regulator adder 408, the hysteretic controller 412 sends a high or low control signal to the variable gain setting block $K_p$ 414, indicative of whether the gain of the ripple suppression compensator 416 at twice the line frequency should be increased or decreased. The gain value $K_p$ may be increased or decreased by a predetermined fixed amount, or the magnitude of the change in gain value $K_p$ may be set in accordance with the magnitude of the signal that is output by the ripple regulator adder 408. The hysteretic controller 412 may optionally apply hysteresis when determining whether to increase or decrease the gain value Kp. It will be appreciated that the ripple regulator 402 can be replaced with a number of other compensating circuits and components that can perform the same function. The variable gain setting block Kp 414 can set the ripple gain value K in accordance with the control signal received from the gain setting controller 412. This gain value K will be used to control the amount of ripple suppression that is provided by the auxiliary converter stage, and may be referred to as a ripple gain value.

The gain value K is provided by the variable gain setting block Kp 414 to an input of the ripple suppression compensator 416. The main error signal $e_1[n]$ 406 is also provided as an input to the ripple suppression compensator 416. The ripple suppression compensator 416 applies a transfer function to the received main error signal $e_1[n]$ 406, wherein the transfer function is set in accordance with the received gain value K. In this example, the transfer function represents a band-pass filter, with a pass-band that includes the frequency of the ripple voltage, that is, twice the line frequency ($2\omega_l$). Further details of the transfer function of the ripple suppression compensator 416 are provided below with reference to figures 5 and 6. The output of the ripple suppression compensator 416 is a high frequency control signal $d_{ripple}[n]$ 418 that will be used for controlling the auxiliary converter stage in order to regulate the amplitude of the ripple voltage in the output voltage of the main PFC stage $v_{out}$.

Figure 5 illustrates, as a block diagram, an example of a transfer function that can be applied by the ripple suppression compensator. In this example, the ripple suppression compensator is implemented using a discrete-time control law, which advantageously has a relatively low hardware cost. For the equation shown in figure 5, a1, b1 and b2 are the coefficients of the ripple suppression compensator that determine the locations of the poles and zeros and K is the received gain value. As described above, the gain value K is regulated based on the ripple requirements in accordance with the comparison with $\Delta v_{ref}[n]$.

Figure 6 illustrates graphically an example of the transfer function that can be applied by the ripple suppression compensator. Figure 6 shows that the ripple suppression compensator has a frequency characteristic similar to that of a band-pass filter with limited gain at twice the line frequency, that is, it is similar to a damped resonant compensator. In this case, for the purpose of ripple regulation, the gain at twice the line frequency is intentionally limited. In some examples, in order to allow universal-input operation of this system at both 50 Hz and 60 Hz line frequencies, the pass-band region has a relatively constant gain between 100 Hz and 120Hz.

Returning again to figure 1, the high frequency control signal $d_{ripple}[n]$ that has been described above with reference to figures 4 to 6 is illustrated with reference 141. The high frequency control signal $d_{ripple}[n]$ 141 is provided to a negative / subtracting input of the auxiliary control adder 136. It is recalled from the above description that the low frequency control signal $D_{aux}[n]$ 140 is provided to the positive / adding input of the auxiliary control adder 136.

The output of the auxiliary control adder 136 is a combined auxiliary control signal $d_{aux}[n]$ 142, which is provided as an input to the auxiliary DPWM$_2$ 137. The low frequency compensator 132 and the high frequency compensator 133 operate with different inputs and over different frequency bands in order to provide the combined auxiliary control signal $d_{aux}[n]$ 142, which may be referred to as a duty ratio control value:

$$d_{aux}[n] = D_{aux}[n] + d_{ripple}[n]$$

(2)

where $D_{aux}[n]$ regulates the dc component of $v_{aux}(t)$ and $d_{ripple}[n]$ suppresses the ripple in $v_{out}$.

In this example, since the auxiliary power / converter stage 104 is a buck-boost converter with synchronous rectifier (that is, without a diode), the auxiliary DPWM$_2$ 137 provides an output control signal that is two complementary control signals: the first auxiliary control signal $G_1$ 121 for the first auxiliary control switch SW$_1$ 118; and the second auxiliary control signal $G_2$ 122 for the second auxiliary control switch SW$_2$ 120. The output control signal generator 131 therefore provides an output control signal 121, 122 for the auxiliary power stage 104 in accordance with the low frequency control signal $D_{aux}[n]$ 140 and the high frequency control signal $d_{ripple}[n]$ 418. It will be appreciated that for different types of auxiliary converter stages 104, the auxiliary DPWM$_2$ 137 can provide different types of control signals, as is well-known in the art.

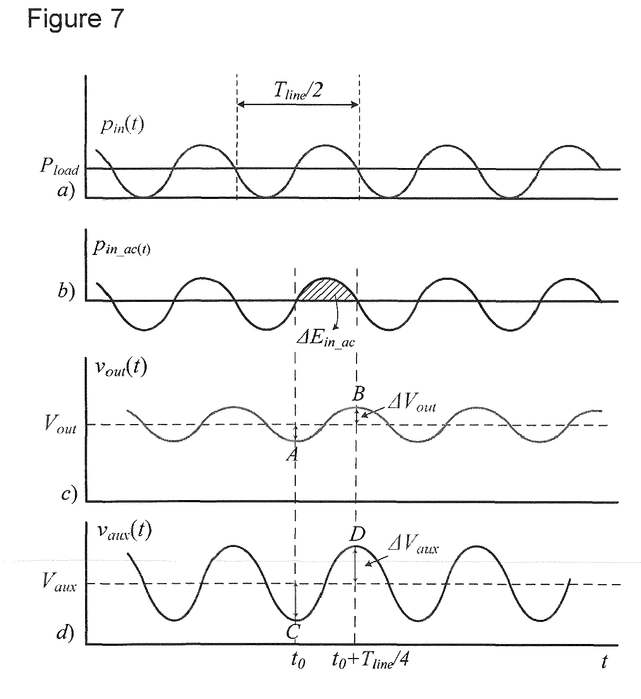

Figure 7 illustrates waveforms of various attributes of the circuit of figure 1 when in use. These waveforms will be used to describe the particularly advantageous feature of controlling a trade-off between the allowable ripple value across the output capacitor $C_{out}$ 114 and the power rating of the auxiliary converter stage 104. As discussed above, the desired value of this trade-off can be used for determining the gain K of the ripple suppression compensator 133 and, thus, a trade-off between the overall system volume and its power processing efficiency. To find a desired trade-off relationship, the following analysis can be applied.

The instantaneous input power of a PFC ($p_{in}(t)$) can be found as:

$$p_{in}(t) = P_{load}[1 - \cos(2\omega t)] \tag{3}$$

where $P_{load}$ is the load dc power.

Plot a) in figure 7 depicts the waveform of the PFC circuit input power waveform. It can be seen that this power has a dc component and a component at the $2\omega_l$ frequency. The dc component is equal to the load power and is instantly absorbed by the load. The ac power is shown in plot b), and has an average of zero over a half line cycle. However, the excessive amount of energy, caused by larger instantaneous power, over a quarter line cycle (shown as the shaded area) results in an ac ripple on the output voltage of the PFC, as shown in plot c). The extra energy delivered by the ac source during this period can be found by integrating the ac power over the shaded area of plot c) as follows:

$$\Delta E_{in\_ac} = \int_{t_0}^{t_0 + T_{line}/4} p_{in\_ac}(t) = \int_{t_0}^{t_0 + T_{line}/4} P_{load}[-\cos(2\omega t)] = \frac{T_{line}}{2\pi} P_{load} \tag{4}$$

In the circuit of figure 1, this differential energy is partially stored on the output capacitor $C_{out}$ 114 and the rest of the energy is transferred to the auxiliary stage capacitor $C_{aux}$ 116 as shown with the following equation:

$$\Delta E_{in\_ac} = \Delta E_C + \Delta E_{aux} \tag{5}$$

where $\Delta E_c$ is the portion of energy stored in $C_{out}$ and $\Delta E_{aux}$ is the remaining energy absorbed by the auxiliary converter stage.

The amount of ripple energy stored in the output capacitor $C_{out}$ 114 during this period, that is, $\Delta E_c$, can be found as the difference between the energy stored at points A and B of plot c) in figure 7, which is found to be:

$$\Delta E_C = E_B - E_A = \frac{1}{2} C_{out}((V_{out} + \Delta V_{out})^2 - (V_{out} - \Delta V_{out})^2) = 2C_{out}V_{out}\Delta V_{out} \tag{6}$$

Therefore, the power processed by the auxiliary stage is a function of the load power, output voltage, output voltage ripple, output capacitor size and line frequency. The average power can be found as:

$$P_{aux} = \frac{2P_{load}}{\pi} - \frac{8C_{out}V_{out}\Delta V_{out}}{T_{line}} \tag{7}$$

After designing the ratings and values of the circuit components based on equations 4 to 7, $P_{aux}$ and hence the system efficiency can be still varied over a smaller range by setting the desired ripple $\Delta V_{out}$. It can be seen from equation 7 that the amount of power that is absorbed by the output capacitor $C_{out}$ 114 is linearly proportional to $\Delta V_{out}$. This shows that, as expected, the reduction in the ripple amplitude results in an increased power rating of the auxiliary stages and since the rating is usually proportional to the additional losses, lower overall system efficiency.

Therefore, it will be appreciated that the trade-off between (1) power consumption of the auxiliary converter stage 106; and (2) the amplitude of ripple in the output voltage $V_{out}$ can be controlled by appropriately setting $v_{ref,aux}$ as shown in figure 3 and / or $\Delta v_{ref}[n]$ as shown in figure 4. These reference values can be hard-coded by a user for a specific application or can be dynamically set by a controller / processor in accordance with operating conditions. For example, a user can program the controller such that the amplitude of the ripple does not exceed 10% of the output voltage $V_{out}$ such that the controller automatically sets the value of $\Delta v_{ref}[n]$ as $V_{out}/10$. Alternatively, an absolute value for the amplitude of the ripple may be preferred for some applications, such as LED lighting, because a bigger ripple voltage would lead to flickering of the LEDs irrespective of the dc value of Vout. In this way, efficient use of the auxiliary converter stage can be made as it is not used to reduce the ripple to an unnecessarily low level if it is not required for a specific application.

To validate the operation of the controller an experimental system based on a programmable-output flyback PFC with an auxiliary buck-boost stage, as shown in figure 1, was created. The parameters of the power stage are given in table I. To implement the controller an FPGA based system was used.

Table I. Parameters of the experimental prototype

| $L_{aux}$ | $C_{aux}$ | $V_{aux}$ | $C_{out}$ | $V_{out}$ | $f_s$ |
|---|---|---|---|---|---|
| 30$\mu$H | 800 $\mu$F | 10V | 500$\mu$F | 5V to 20V | 200Khz |

The converter provides programmable output voltages ranging between 5 V and 20 V with output powers of 20W and 45W for these two cases respectively. The auxiliary stage is designed to process up to 70 % of the rated output power.

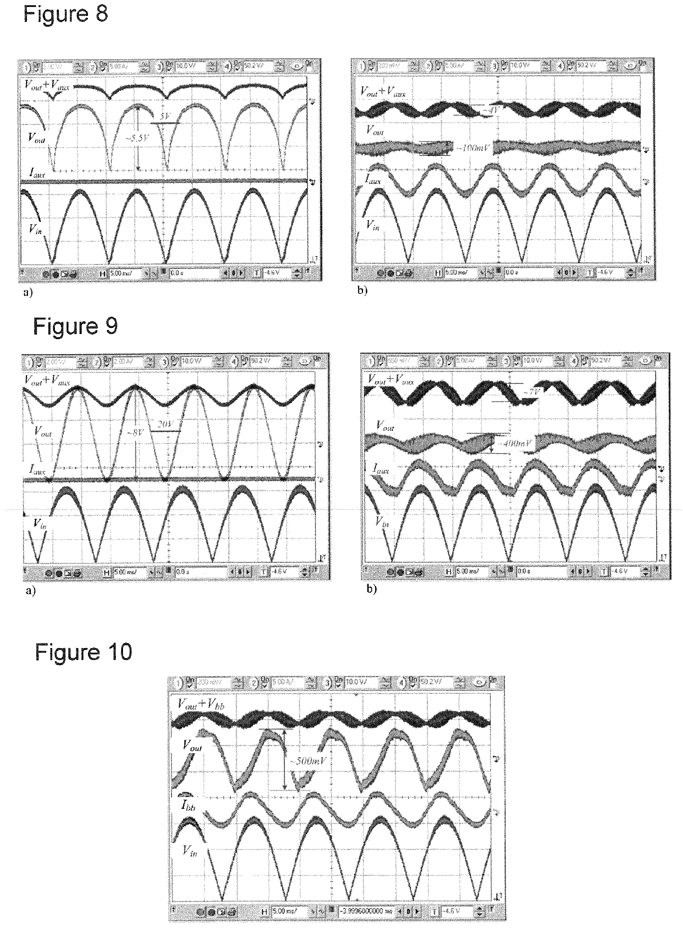

To demonstrate the effectiveness of the control method, the PFC is operated with and without the auxiliary controller activated and the results for two different operating conditions, 5 V, 10 W and 20 V, 20 W output are shown in figures 8 and 9, respectively. In both cases the maximum peak-to-peak ripple amplitude is kept at 2% of the nominal output voltage value.

Figure 8 shows steady state operation of the flyback PFC with ripple cancellation circuit disabled in plot a) and enabled in figure b) while operating with $V_{in}$=110Vrms, $V_{out}$=5V, $P_{load}$=10W. $V_{out}+V_{aux}$ is the sum of the voltages of the PFC and auxiliary stage capacitors measured at the drain of $SW_2$ of figure 1 (10V/div). $I_{aux}$ is the auxiliary circuit inductor current (5A/div) and $V_{out}$ is the PFC output voltage (2V/div in plot a) and 200mV/div in plot b)). $V_{in}$ is the ac input voltage (50V/div). Time scale is 5msec/div.

Figure 9 shows steady state operation of the flyback PFC with ripple cancellation circuit disabled in plot a) and enabled in plot b) while operating with $V_{in}$=110Vrms, $V_{out}$=20V, $P_{load}$=20W. $V_{out}+V_{aux}$ is the sum of the voltages of the PFC and auxiliary stage capacitors measured at the drain of $SW_2$ of figure 1 (10V/div). $I_{aux}$ is the auxiliary circuit inductor current (5A/div) and $V_{out}$ is the PFC output voltage (2V/div in plot a) and 200mV/div in plot b)). $V_{in}$ is the ac input voltage (50V/div). Time scale is 5msec/div.

It can be seen that the auxiliary stage and the auxiliary controller provide a drastic reduction of the ripple and stable control of its amplitude. In figure 8, the amplitude of the ripple in the output voltage $V_{out}$ has been reduced from about 5.5V to about 100mV. In figure 9, the amplitude of the ripple in the output voltage $V_{out}$ has been reduced from about 8V to about 400mV. The results also show that the amplitude of the voltage swing across the auxiliary output $V_{aux}$ is constrained to 14V peak-to-peak, which is equivalent to 70% allowed ripple on $C_{aux}$.

It should also be noted that, as previously described, for the 5 V case an output capacitor $C_{out}$ of about 60mF would be needed to achieve the same amount of ripple attenuation. By comparing this value with those of Table I it can be seen that the introduced system advantageously uses about 45 times smaller total capacitance value.

Figure 10 verifies the capability of the controller to have a programmable output voltage ripple. Figure 10 shows graphically the steady state operation of the PFC with the same operating conditions of figure 8b, where 5% ac voltage ripple is allowed on the output voltage. As shown in figure 10, the variable gain of the controller allows for achieving the desirable output voltage ripple which is 500mV in this case, instead of 100mV as shown in figure 8b.

In other examples, one or more of the ripple reduction circuits disclosed herein can be used with circuits that are not necessarily PFC circuits. For example, a ripple reduction circuit can be used for inverters (dc-ac converters) by applying the same principles that are discussed herein in relation to PFC rectifier applications (ac-dc).

One or more of the circuits disclosed herein can be particularly beneficial for programmable-output adapters, as defined by the IEEE-UPAMD standard, because the amplitude of the ripple at twice the line frequency can be a large concern. In these applications straightforward PFC solutions based on flyback converters used in constant output voltage applications can be impractical. This can be mostly due to a drastic increase of the requirements for the output capacitance value, which is needed to provide tight output regulation at low output voltages. Also, in LED lighting applications even a relatively small ripple at the output of the PFC stage can cause light flickering. The flickering can be reduced to minimized with the use of a large electrolytic capacitor. However use of a large electrolytic capacitor can suffer from reliability problems related to the degradation of the capacitor.

One or more of the controller implementations disclosed herein can be particularly advantageous for cost-sensitive applications that require high reliability. They can be considered better that an open loop approach, which may rely on information of converter parameters, including values of the inductor, capacitor, which change in time and with temperature, and need information about the line frequency. The open loop approach may not be able to guarantee reliable control of the ripple amplitudes and dc voltage value of the auxiliary converter stage due to parameter variations. Therefore, it may not be possible to use an open loop approach for accurate trade-off management between the overall system volume and efficiency, in the same way that is possible with examples disclosed herein. Also, circuits disclosed in this document can be better than current mode based controllers because such controllers can require costly and lossy current sensing circuits. A sine pulse width modulation (SPWM) scheme can eliminate a need for current sensing. However, SPWM systems may require additional hardware to measure the phase and frequency of the output voltage ripple, such as a phase locked loop (PLL), which can be hardware demanding.

It will be appreciated that the ripple regulation circuits described in this document provide practical cost-effective control for regulating the operation of PFC rectifiers with ripple cancellation circuits. The solution can be a simple modification of a conventional digital voltage mode PFC controller. An auxiliary controller can utilize two additional compensators operating at different frequency bands, where one of them has a programmable gain, and an extra digital pulse width modulator (DPWM). The controller can be directly used with single loop flyback based PFC systems (and other single loop PFC topologies) as shown in figure 1, or can be used as an addition to an outer voltage loop of two-loop based PFC controller architectures, such as a boost operating in continuous conduction mode.

Disclosed herein is a hardware-efficient controller for rectifiers with power factor correction (PFC) that includes a circuit for cancellation or reduction of the output voltage ripple at two times the line frequency. Simultaneous and independent regulation of the ripple amplitudes and dc voltage values for both the PFC stage and the cancellation circuit can be provided, thereby allowing for trade-off management between the overall system volume and its efficiency. Advantageously, the controller may not require costly components for obtaining information about the output current, converter parameters, or phase and frequency of the voltage ripple. These advantages can be obtained through the hardware sharing, that is, utilization of available (easily accessible) information about the output voltage error, and use of a novel two-band compensator.

It will be appreciated that one or more of the various adders disclosed in this document could be implemented such that they subtract signal A from signal B or subtract signal B from signal A, without changing their functionality of determining a difference between signals A and B. Therefore, any of the adders disclosed in this document can be considered as having a first input and a second input, with one of the first and second inputs being a positive / adding input and the other of the first and second inputs being a negative / subtracting input.

Any components that are described herein as being "coupled" or "connected" could be directly or indirectly coupled or connected. That is, one or more components could be located between two components that are said to be coupled or connected whilst still enabling the required functionality to be achieved.

It will be appreciated that any reference to "close to", "before", "shortly before", "after" "shortly after", "higher than", or "lower than", etc, can refer to the parameter in question being less than or greater than a threshold value, or between two threshold values, depending upon the context.

**Claims**

1. A ripple reduction circuit for a PFC circuit, the PFC circuit comprising a main PFC stage and an auxiliary converter stage connected across a load, the ripple reduction circuit comprising:

   an input configured to receive error signalling representative of a difference between a measured voltage of the PFC circuit and a reference value;
   a low frequency compensator configured to low-pass filter the error signalling in order to provide a low frequency control signal representative of a low frequency component of a voltage level in the auxiliary converter stage;
   a gain value determinator configured to determine a ripple gain value in accordance with a difference between the error signalling and a reference ac voltage ripple level;
   a high frequency compensator configured to band-pass filter the error signalling in order to generate a high frequency control signal for regulating the amplitude of a ripple voltage across the load, wherein the ripple gain value is applied to the pass-band of the high frequency compensator; and
   an output control signal generator configured to provide an output control signal for the auxiliary converter stage in accordance with the low frequency control signal and the high frequency control signal.

2. The ripple reduction circuit of claim 1, wherein the error signalling is representative of a difference between a measured voltage of the auxiliary converter stage and a reference value.

3. The ripple reduction circuit of claim 1 or claim 2, wherein the low frequency control signal is representative of a dc component of the voltage level in the auxiliary converter stage.

4. The ripple reduction circuit of any preceding claim, wherein the gain value determinator comprises a ripple detector configured to extract a ripple component signal from the error signalling.

5. The ripple reduction circuit of claim 4, wherein the ripple detector comprises a high-pass filter or a band-pass filter configured to filter out dc components of the error signalling.

6. The ripple reduction circuit of claim 4 or claim 5, wherein the gain value determinator comprises a ripple regulator adder configured to determine a difference between the ripple component signal and the reference ac voltage level in order to provide a ripple error signal.

7. The ripple reduction circuit of claim 6, wherein the gain value determinator comprises a gain setting controller and a variable gain setting block, wherein the gain setting controller is configured to provide a control signal to the variable gain setting block and the variable gain setting block is configured to set the ripple gain value in accordance with the control signal received from the gain setting controller.

8. The ripple reduction circuit of claim 7, wherein the gain setting controller is configured to provide a control signal that is indicative of whether the ripple gain value should be increased or decreased by a fixed amount.

9. The ripple reduction circuit of any preceding claim, wherein the high frequency compensator is configured to band-pass filter the error signalling, wherein the pass-band includes a frequency that corresponds to double the line frequency of a received ac waveform.

10. The ripple reduction circuit of any preceding claim, wherein the error signalling comprises:

a main error signal representative of a difference between the voltage across the load and a main reference value; and
an auxiliary error signal representative of a difference between a voltage of the auxiliary converter stage and an auxiliary reference value.

11. The ripple reduction circuit of claim 10, wherein:

the low frequency compensator is configured to low-pass filter the auxiliary error signal in order to provide the low frequency control signal;
the high frequency compensator is configured to band-pass filter the main error signal, wherein the gain value for the pass-band of the band-pass filter is set in accordance with a difference between the auxiliary error signal and a reference AC voltage ripple level.

12. The ripple reduction circuit of any preceding claim, wherein the output control signal generator comprises an auxiliary control adder that is configured to determine a difference between the high frequency control signal from the low frequency control signal in order to provide a duty ratio control signal.

13. The ripple reduction circuit of claim 12, wherein the output control signal generator further comprises a DPWM configured to provide auxiliary control signalling in accordance with the duty ratio control signal.

14. An integrated circuit comprising the ripple reduction circuit of any preceding claim.

15. An led lighting controller or a programmable output charger comprising the ripple reduction circuit of any preceding claim.

**Amended claims in accordance with Rule 137(2) EPC.**

1. A ripple reduction circuit for a PFC circuit, the PFC circuit comprising a main PFC stage (102) and an auxiliary converter stage (104) connected across a load, the ripple reduction circuit comprising:

an input (123, 124) configured to receive error signalling representative of a difference between a measured voltage of the PFC circuit and a reference value;
a low frequency compensator (132) configured to low-pass filter, an auxiliary error signal in order to provide a low frequency control signal representative of a low frequency component of a voltage level in the auxiliary converter stage;
a gain value determinator (402) configured to determine a ripple gain value in accordance with a difference between the auxiliary error signal and a reference ac voltage ripple level;
a high frequency compensator (133) configured to band-pass filter the main error signal in order to generate a high frequency control signal for regulating the amplitude of a ripple voltage across the load, wherein the ripple gain value is applied to the pass-band of the high frequency compensator; and
an output control signal generator (139) configured to provide an output control signal for the auxiliary converter stage in accordance with the low frequency control signal and the high frequency control signal;
wherein the error signalling comprises:

the main error signal (128), representative of a difference between the voltage across the load and a main reference value; and
the auxiliary error signal (129), representative of a difference between a voltage of the auxiliary converter stage and an auxiliary reference value (Vaux).

2. The ripple reduction circuit of claim 1, wherein the error signalling is representative of a difference between a measured voltage of the auxiliary converter stage and a reference value.

3. The ripple reduction circuit of claim 1 or claim 2, wherein the low frequency control signal is representative of a dc component of the voltage level in the auxiliary converter stage.

4. The ripple reduction circuit of any preceding claim, wherein the gain value determinator comprises a ripple detector configured to extract a ripple component signal from the error signalling.

5. The ripple reduction circuit of claim 4, wherein the ripple detector comprises a high-pass filter or a band-pass filter configured to filter out dc components of the error signalling.

6. The ripple reduction circuit of claim 4 or claim 5, wherein the gain value determinator comprises a ripple regulator adder (408) configured to determine a difference between the ripple component signal and the reference ac voltage level in order to provide a ripple error signal.

7. The ripple reduction circuit of claim 6, wherein the gain value determinator comprises a gain setting controller (412) and a variable gain setting block (414), wherein the gain setting controller is configured to provide a control signal to the variable gain setting block and the variable gain setting block is configured to set the ripple gain value in accordance with the control signal received from the gain setting controller.

8. The ripple reduction circuit of claim 7, wherein the gain setting controller is configured to provide a control signal that is indicative of whether the ripple gain value should be increased or decreased by a fixed amount.

9. The ripple reduction circuit of any preceding claim, wherein the high frequency compensator is configured to band-pass filter the error signalling, wherein the pass-band includes a frequency that corresponds to double the line frequency of a received ac waveform.

10. The ripple reduction circuit of any preceding claim, wherein the output control signal generator comprises an auxiliary control adder that is configured to determine a difference between the high frequency control signal from the low frequency control signal in order to provide a duty ratio control signal.

11. The ripple reduction circuit of claim 10, wherein the output control signal generator further comprises a DPWM configured to provide auxiliary control signalling in accordance with the duty ratio control signal.

12. An integrated circuit comprising the ripple reduction circuit of any preceding claim.

13. An led lighting controller or a programmable output charger comprising the ripple reduction circuit of any preceding claim.

Figure 1

EP 2 871 758 A1

14

## Figure 2

## Figure 3

## Figure 4

## Figure 5

$$d_{ripple}[n] = a_1 d_{ripple}[n-1] + K(e_1[n] + b_1 e_1[n-1] + b_2 e_1[n-1])$$

## Figure 6

Figure 7

Figure 8

a)

b)

Figure 9

a)

b)

Figure 10

Europäisches
Patentamt

European
Patent Office

Office européen
des brevets

## EUROPEAN SEARCH REPORT

Application Number

EP 13 19 2185

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | QING-CHANG ZHONG ET AL: "Reduction of DC-bus voltage ripples and capacitors for single-phase PWM-controlled rectifiers", IECON 2012 - 38TH ANNUAL CONFERENCE ON IEEE INDUSTRIAL ELECTRONICS SOCIETY, IEEE, 25 October 2012 (2012-10-25), pages 708-713, XP032281022, DOI: 10.1109/IECON.2012.6388665 ISBN: 978-1-4673-2419-9 | 1-9, 12-15 | INV. H02M1/15 H02M1/42 |
| A | * page 711 - page 712; figures 3, 6 * ----- | 10,11 | |
| Y | US 6 424 207 B1 (JOHNSON ROBERT D [US]) 23 July 2002 (2002-07-23) | 1-9, 12-15 | |
| A | * column 2, line 49 - column 4, line 62; figures 1,2 * ----- | 10,11 | |
| A | HUAI WANG ET AL: "A novel concept to reduce the DC-link capacitor in PFC front-end power conversion systems", APPLIED POWER ELECTRONICS CONFERENCE AND EXPOSITION (APEC), 2012 TWENTY-SEVENTH ANNUAL IEEE, IEEE, 5 February 2012 (2012-02-05), pages 1192-1197, XP032127820, DOI: 10.1109/APEC.2012.6165970 ISBN: 978-1-4577-1215-9 * page 1194, right-hand column; figure 5 * ----- | 1-15 | |
| A | US 2012/105028 A1 (HOERMAN JOHAN [SE] ET AL) 3 May 2012 (2012-05-03) * paragraph [0028] - paragraph [0032]; figure 3 * ----- | 1-15 | |

TECHNICAL FIELDS
SEARCHED (IPC)

H02M

The present search report has been drawn up for all claims

| Place of search | Date of completion of the search | Examiner |
|---|---|---|
| Munich | 15 April 2014 | Kruip, Stephan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ...........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 13 19 2185

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2014

| Patent document cited in search report | | Publication date | Patent family member(s) | | Publication date |
|---|---|---|---|---|---|
| US 6424207 | B1 | 23-07-2002 | NONE | | |
| US 2012105028 | A1 | 03-05-2012 | CN | 102474183 A | 23-05-2012 |
| | | | EP | 2449663 A1 | 09-05-2012 |
| | | | US | 2012105028 A1 | 03-05-2012 |
| | | | WO | 2011000588 A1 | 06-01-2011 |

EPO FORM P0459

For more details about this annex : see Official Journal of the European Patent Office, No. 12/82